# EUROPEAN PATENT APPLICATION

(11) **EP 4 398 358 A1**
(43) Date of publication of application: **10.07.2024**
(21) Application number: 23745857.5
(22) Date of filing: 06.01.2023
(51) Int. Cl.: H01M 10/04

(54) **ELECTRODE SHEET FORMING METHOD, MANUFACTURING METHOD FOR WOUND ELECTRODE ASSEMBLY, AND MANUFACTURING METHOD FOR LAMINATED ELECTRODE ASSEMBLY**

(30) Priority: 29.01.2022 CN 202210111901
(71) Applicant: Contemporary Amperex Technology Co., Limited, Ningde, Fujian 352100 (CN)
(72) Inventor: LIN, Wenfa, Ningde, Fujian 352100 (CN); YE, Jie, Ningde, Fujian 352100 (CN); ZHAO, Ying, Ningde, Fujian 352100 (CN)
(74) Representative: von Tietzen und Hennig, Nikolaus
(86) International application number: PCT/CN2023/071031
(87) International publication number: WO 2023/142972

(57) **Abstract**

The present application relates to the technical field of batteries, and provides an electrode sheet forming method, a manufacturing method for a wound electrode assembly, a manufacturing method for a laminated electrode assembly, an electrode assembly, a battery cell, a battery, an electric device, and a manufacturing device for an electrode sheet. The electrode sheet forming method comprises: providing a first substrate having a defect and a second substrate having no defect; cutting the first substrate to divide the first substrate into a first portion having the effect and second portions having no defect; and connecting at least one second portion to the second substrate in the lengthwise direction of the second substrate to form an electrode sheet. According to the electrode sheet forming method, only the first portion having the defect is scrapped, and the second portions having no defect can be fully utilized, thereby preventing the first substrate from being entirely scrapped, improving the utilization rate of the first substrate having a defect, and reducing the manufacturing cost of batteries.

## Description

### Cross-Reference to Related Application

The present application claims the priority to Chinese patent application 202210111901.2, filed on January 29, 2022 and entitled with "ELECTRODE SHEET FORMING METHOD, MANUFACTURING METHOD FOR WOUND ELECTRODE ASSEMBLY, AND MANUFACTURING METHOD FOR LAMINATED ELECTRODE ASSEMBLY", the contents of which are incorporated herein in their entirety by reference.

### Technical Field

The present application relates to the technical field of batteries, and particularly, relates to an electrode sheet forming method, a manufacturing method for a wound electrode assembly, a manufacturing method for a laminated electrode assembly, an electrode assembly, a battery cell, a battery, an electric device, and a manufacturing device for an electrode sheet.

### Background Art

Energy conservation and emission reduction are the key to sustainable development of the automotive industry. Electric vehicles have become an important part of the sustainable development of the automotive industry due to their advantages in energy conservation and environmental protection. For the electric vehicles, the battery is an important factor related to their development.

For the batteries, the cost control for battery manufacturing is one of the important reasons for enabling sustainable development of the battery technology. Hence, how to reduce the manufacturing cost of batteries become the problem urgent to be solved in the technical field of batteries.

### Summary

Embodiments of the present application provide an electrode sheet forming method, a manufacturing method for a wound electrode assembly, a manufacturing method for a laminated electrode assembly, an electrode assembly, a battery cell, a battery, an electric device, and a manufacturing device for an electrode sheet.

In a first aspect, embodiments of the present application provide an electrode sheet forming method, including:
providing a first substrate having defect(s) and a second substrate having no defect;
cutting the first substrate, to divide the first substrate into a first part having the defect(s) and at least one second part having no defect;
making the at least one second part connected with the second substrate in a length direction of the second substrate, to form the electrode sheet.

In the above technical solutions, the first substrate having defect(s) is divided into the first part having the defect(s) and the at least one second part having no defect, and the at least one second part having no defect may be connected to the second substrate having no defect to form the electrode sheet. In this way, only the first part having the defect(s) needs to be scrapped, while the at least one second part having no defect can be fully utilized, thereby preventing the first substrate from being entirely scrapped, improving the utilization rate of the first substrate having defect(s), and reducing the manufacturing cost of a battery.

In some embodiments of the first aspect of the present application, the cutting the first substrate includes:
dividing the first substrate into the first part and a plurality of second parts.

In the above technical solution, the dividing the first substrate into the first part and a plurality of second parts is conducive to dividing the first substrate into the available second parts as much as possible, which reduces the scrap volume of the first substrate and increases the utilization rate of the first substrate.

In some embodiments of the first aspect of the present application, the plurality of second parts are made to be connected to one end of the second substrate in the length direction, to form the electrode sheet.

In the above technical solution, the plurality of second parts are connected to one end of the second substrate in the length direction of the second substrate. In other words, the plurality of second parts are concentrated at one end of the second substrate in the length direction of the second substrate, facilitating connection between the second parts and the second substrate, and improving the electrode sheet forming efficiency.

In some embodiments of the first aspect of the present application, some of the plurality of second parts are connected to one end of the second substrate in the length direction, and the rest of the plurality of second parts are connected to the other end of the second substrate in the length direction, to form the electrode sheet.

In the above technical solution, some of the second part are connected to the second substrate at one end of the second substrate in the length direction, and the rest of the second parts are connected to the second substrate at the other end of the second substrate in the length direction, to avoid over-concentrated distribution of the second parts, thereby improving the quality of the electrode sheet.

In some embodiments of the first aspect of the present application, one of the second parts is connected with one end of one second substrate in the length direction to form the electrode sheet.

In the above technical solution, one of the second parts is connected with one end of one second substrate in the length direction of the second substrate, such that the electrode sheet formed in this way has only one connection position, which is conducive to improving the quality of the electrode sheet.

In some embodiments of the first aspect of the present application, a gap is formed at the connection position after the second part is connected with the second substrate.

In the above technical solution, a gap is formed at the connection position after the second part is connected with the second substrate, such that when bending occurs at the connection position, the gap can reduce the risk of the second part and the second substrate pressing each other at the connection position.

In some embodiments of the first aspect of the present application, before cutting the first substrate, the electrode sheet forming method further includes:
die cutting the first substrate, to make the first substrate form a plurality of first tabs arranged at intervals in the length direction thereof.

In the above technical solution, the plurality of first tabs are arranged at intervals in the length direction of the first substrate, then the first tabs on the second parts may also be arranged at intervals, and after the electrode sheet formed after connection of the second part and the second substrate is manufactured into an electrode assembly, it facilitates the electrolytic solution infiltrating the electrode assembly.

In some embodiments of the first aspect of the present application, the electrode sheet forming method further includes:
die cutting the second substrate, to make the second substrate form a plurality of second tabs arranged at intervals in the length direction thereof.

After the second parts are connected with the second substrate, the plurality of first tabs and the plurality of second tabs form a plurality of tabs of the electrode sheet, and in the length direction, the distance between two adjacent tabs in the plurality of tabs gradually increases from one end to the other end of the electrode sheet.

In the above technical solution, the distance between the two adjacent tabs in the plurality of tabs of the electrode sheet gradually increases from one end to the other end of the electrode sheet. When winding the electrode sheet in a direction that the distance between two adjacent tabs gradually increases, it can reduce the risk of tab excursion, reduce the risk of poor welding (e.g., the tab cannot be completely welded with the adapter) and the short circuit of the electrode assembly using the electrode sheet, and improve safety performance.

In a second aspect, embodiments of the present application provide a manufacturing method for a wound electrode assembly, including:
providing a first electrode sheet manufactured by the electrode sheet forming method according to the embodiments of the first aspect;
providing a second electrode sheet, where the polarity of the second electrode sheet is opposite to that of the first electrode sheet;
providing a separator;
stacking and then winding the first electrode sheet, the separator and the second electrode sheet, to form the wound electrode assembly.

In the above technical solution, the manufacturing method for a wound electrode assembly uses the first electrode sheet manufactured by the electrode sheet forming method provided by embodiments of the first aspect, which can reduce the waste of materials in the manufacturing process of the wound electrode assembly and thereby reduce the manufacturing cost of the wound electrode assembly.

In some embodiments of the second aspect of the present application, the stacking and then winding the first electrode sheet, the separator and the second electrode sheet to form the wound electrode assembly includes:
attaching the first electrode sheet to the separator to form a first combined structure;
attaching the second electrode sheet to the first combined structure and then winding the same to form the wound electrode assembly.

In the above technical solution, since the first electrode sheet includes the second part and the second substrate which are connected, the separator is attached to the first electrode sheet first. In other words, the second part and the second substrate are connected by the separator, to form the first combined structure, which can reduce the risk of shifting and misalignment of the second part and the second substrate relative to the separator during the winding.

In some embodiments of the second aspect of the present application, the second electrode sheet is manufactured by using the electrode sheet forming method of the embodiments of the first aspect.

In the above technical solution, the manufacturing method for a wound electrode assembly uses the second electrode sheet manufactured by the electrode sheet forming method provided by embodiments of the first aspect, which can reduce the waste of materials in the manufacturing process of the wound electrode assembly and thereby reduce the manufacturing cost of the wound electrode assembly.

In some embodiments of the second aspect of the present application, when winding the first electrode sheet, the winding starts from the second part.

In the above technical solution, the winding starts from the second part, such that the second part is closer to the winding center relative to the second substrate, and the second substrate has a certain binding ability to the second part, which can improve the structure stability of the wound electrode assembly.

In some embodiments of the second aspect of the present application, the wound electrode assembly includes a flat straight region and two bending regions, where the two bending regions are connected with the two ends of the flat straight region, respectively;
the stacking and then winding the first electrode sheet, the separator and the second electrode sheet to form the wound electrode assembly includes:
making connection position of the second part and the second substrate be in the bending region.

In the above technical solution, connection position of the second part and the second substrate is made to be in the bending region, which can reduce the risk of lithium plating in the bending region.

In a third aspect, embodiments of the present application provide a manufacturing method for a laminated electrode assembly, including:
providing a first electrode sheet manufactured by the electrode sheet forming method according to the embodiments of the first aspect, where the first electrode sheet is a negative electrode sheet;
providing a second electrode sheet, where the second electrode sheet is a positive electrode sheet;
providing a separator;
stacking and then folding the first electrode sheet, the separator and the second electrode sheet, to form the laminated electrode assembly.

In the above technical solution, the manufacturing method for a laminated electrode assembly uses the negative electrode sheet manufactured by the electrode sheet forming method provided by embodiments of the first aspect, which can reduce the waste of materials in the manufacturing process of the laminated electrode assembly and thereby reduce the manufacturing cost of the wound electrode assembly.

In a fourth aspect, embodiments of the present application provide an electrode assembly, including a separator and two electrode sheets having opposite polarities, where at least one of the two electrode sheets is manufactured by using the electrode sheet forming method of the embodiments of the first aspect, and the separator is used to separate the two electrode sheets.

In the above technical solution, at least one electrode sheet of the electrode assembly is manufactured by the electrode sheet forming method provided by embodiments of the first aspect, which can reduce the waste of materials in the manufacturing process of the electrode assembly and thereby reduce the manufacturing cost of the electrode assembly.

In some embodiments of the fourth aspect of the present application, the electrode assembly is a wound electrode assembly; and the two electrode sheets are both manufactured by using the electrode sheet forming method of the embodiments of the first aspect.

In the above technical solution, the two electrode sheets of the electrode assembly are both manufactured by using the electrode sheet forming method provided by embodiments of the first aspect, which can reduce the waste of materials in the manufacturing process of the electrode assembly and thereby reduce the manufacturing cost of the electrode assembly.

In some embodiments of the fourth aspect of the present application, a gap is formed at the connection position of the second part and the second substrate.

In the above technical solution, a gap is formed at connection position of the second part and the second substrate, and that there are no active materials at the gap position can reduce the risk of lithium plating. When bending occurs at the connection position, the gap can reduce the risk of the second part and the second substrate pressing each other at the connection position.

In some embodiments of the fourth aspect of the present application, the wound electrode assembly includes a flat straight region and two bending regions, where the two bending regions are connected with the two ends of the flat straight region, respectively; and the gaps are located at the bending regions.

In the above technical solution, the gap formed by connection between the second part and the second substrate is located in the bending region, facilitating increasing the CB (Cell Balance) value of the bending region, and reducing the risk of lithium plating of the bending region, and that the gap is located in the bending region also can reduce the risk of the second part and the second substrate pressing each other at the connection position.

In some embodiments in the fourth aspect of the present application, a part or all of the second part is located in the innermost circle of the wound electrode assembly.

In the above technical solution, a part or all of the second part is located in the innermost circle of the wound electrode assembly, such that the second substrate has a certain binding ability to the second part, which can improve the structure stability of the wound electrode assembly.

In a fifth aspect, embodiments of the present application provide a battery cell, including the electrode assembly provided by the embodiments of the fourth aspect.

In the above technical solution, the battery cell including the electrode assembly provided by the embodiments of the fourth aspect has low material waste rate during the manufacturing process, and can reduce the manufacturing cost.

In a sixth aspect, embodiments of the present application provide a battery, including at least one battery cell provided by the embodiments of the fifth aspect.

In a seventh aspect, embodiments of the present application provide an electric device, including at least one battery provided by the embodiments of the sixth aspect.

In an eighth aspect, embodiments of the present application provide a manufacturing device for an electrode sheet, including a conveying apparatus, a detection apparatus, and a cutting apparatus, where the conveying apparatus is configured to convey a first substrate; the detection apparatus is configured to detect whether the first substrate has defect(s); and the cutting apparatus is configured to cut the first substrate having defect(s), to divide the first substrate into a first part having defect(s) and at least one second part having no defect.

In the above technical solution, the electrode sheet is manufactured through the manufacturing device for the electrode sheet, reducing the manufacturing cost of the electrode sheet and thereby reducing the manufacturing cost of the battery.

In some embodiments of the eighth aspect, the manufacturing device for the electrode sheet further includes a die cutting apparatus, provided upstream of the detection apparatus, where the die cutting apparatus is configured to die cut the first substrate, to make the first substrate form a plurality of first tabs arranged at intervals in the length direction thereof.

### Brief Description of Drawings

In order to illustrate the technical solutions of the embodiments of the present application more clearly, the drawings required to be used in the embodiments will be briefly introduced below. It should be understood that the drawings below only show some embodiments of the present application and thus should not be construed as limiting the scope. Those of ordinary skill in the art may also obtain other drawings based on the drawings without paying creative efforts.
FIG. 1 is a schematic structural diagram of a vehicle provided by some embodiments of the present application;
FIG. 2 is a schematic structural diagram of a battery provided by some embodiments of the present application;
FIG. 3 is an exploded view of a battery cell provided by some embodiments of the present application;
FIG. 4 is a flow block diagram of an electrode sheet forming method provided by some embodiments of the present application;
FIG. 5 is a schematic structural diagram of a first substrate provided by some embodiments of the present application;
FIG. 6 is a schematic structural diagram of an electrode sheet formed after the second parts are connected with the second substrate, provided by some embodiments of the present application;
FIG. 7 is a flow block diagram of an electrode sheet forming method provided by yet some embodiments of the present application;
FIG. 8 is a schematic structural diagram of an electrode sheet formed after the second parts are connected with the second substrate, provided by yet some embodiments of the present application;
FIG. 9 is a schematic structural diagram of an electrode sheet formed after the second parts are connected with the second substrate, provided by other embodiments of the present application;
FIG. 10 is a schematic structural diagram of an electrode sheet formed after the second parts are connected with the second substrate, provided by still some embodiments of the present application;
FIG. 11 is a flow block diagram of an electrode sheet forming method provided by other embodiments of the present application;
FIG. 12 is a flow block diagram of an electrode sheet forming method provided by still some embodiments of the present application;
FIG. 13 is a flow block diagram of a manufacturing method for a wound electrode assembly provided by some embodiments of the present application;
FIG. 14 is a flow block diagram of a manufacturing method for a wound electrode assembly provided by yet some embodiments of the present application;
FIG. 15 is a schematic diagram of a structure after a first electrode sheet, a separator and a second electrode sheet are attached, provided by some embodiments of the present application;
FIG. 16 is a schematic diagram of a structure after a first electrode sheet, a separator and a second electrode sheet are attached, provided by yet some embodiments of the present application;
FIG. 17 is a schematic structural diagram of a wound electrode assembly provided by some embodiments of the present application;
FIG. 18 is a schematic structural diagram of a wound electrode assembly provided by yet some embodiments of the present application;
FIG. 19 is a flow block diagram of a manufacturing method for a wound electrode assembly provided by other embodiments of the present application;
FIG. 20 is a flow block diagram of a manufacturing method for a laminated electrode assembly provided by some embodiments of the present application;
FIG. 21 is a schematic diagram of a structure after a first electrode sheet, a separator and a second electrode sheet are attached, provided by still some embodiments of the present application;
FIG. 22 is a schematic structural diagram of a laminated electrode assembly provided by some embodiments of the present application; and
FIG. 23 is a schematic structural diagram of a manufacturing device for an electrode sheet provided by some embodiments of the present application.

Reference signs: 1000-vehicle; 100-battery; 10-box; 11-installation space; 12-first box; 13-second box; 20-battery cell; 21-housing; 211-opening; 22-end cover assembly; 221-end cover; 222-electrode terminal; 23-electrode assembly; 23a-wound electrode assembly; 23b-laminated electrode assembly; 231-electrode sheet; 231a-first electrode sheet; 231b-second electrode sheet; 2311-first end; 2312-second end; 2313-gap; 232-separator; 24-current collection member; 200-controller; 300-motor; 400-first substrate; 410-defect; 420-first part; 430-second part; 430a-second part of first electrode sheet; 430b-second part of second electrode sheet; 440-first tab; 500-second substrate; 500a-second substrate of first electrode sheet; 500b-second substrate of second electrode sheet; 510-second tab; 2000-manufacturing device of electrode sheet; 2100-conveying apparatus; 2200-detection apparatus; 2300-cutting apparatus; 2400-die cutting apparatus; X-length direction; Y-width direction; Z-thickness direction; I-flat straight region; II-bending region.

### Detailed Description of Embodiments

In order to make the purposes, technical solutions and advantages of the embodiments of the present application clearer, the technical solutions in the embodiments of the present application will be clearly and completely described below in conjunction with the drawings in the embodiments of the present application. Obviously, the described embodiments are some of the embodiments, not all of them. Generally, the components of the embodiments of the present application described and shown in the drawing here can be arranged and designed in various configurations.

Therefore, the detailed description of the embodiments of the present application provided in the drawings below is not intended to limit the protection scope of the present application, but only indicate selected embodiments of the present application. Based on the embodiments in the present application, all other embodiments obtained by those of ordinary skill in the art without paying creative efforts fall within the scope of protection of the present application.

It should be noted that without conflict, the embodiments and the features of the embodiments in the present application may be combined with each other.

It should be noted that similar reference numerals and letters represent similar items in the following drawings, therefore, once an item is defined in one figure, it does not need to be further defined and explained in subsequent figures.

In the description of the embodiments of the present application, it should be indicated that the orientation or positional relationships are based on orientation or positional relationships shown in the drawings, or the orientation or positional relationships in which the product of the present application is commonly placed when in use, or the orientation or positional relationships of the present application commonly understood by those skilled in the art, only for the convenience of describing the present application and simplifying the description, rather than indicating or implying that the device or element referred to must have a specific orientation, or be constructed and operated in a specific orientation, and therefore cannot be understood as a limitation on the present application. In addition, the terms "first", "second", "third", etc. are only used to distinguish descriptions and shall not be understood as indicating or implying importance in relativity.

At present, from the perspective of the development of the market situation, the application of power batteries is becoming more and more extensive. The power batteries are not only used in energy storage power source systems such as hydraulic, thermal, wind and solar power plants, but also widely used in electric means of transport such as electric bicycles, electric motorcycles, electric vehicles, as well as fields of military equipment and aerospace, etc. With the continuous expansion of power battery application fields, its market demand is also constantly increasing.

In the present application, the battery cell may include lithium ion secondary battery, lithium ion primary battery, lithium sulfur battery, sodium lithium ion battery, sodium ion battery or magnesium ion battery, etc., which is not limited in the embodiments of the present application. The battery cell may be in a shape of cylinder, flat body, cuboid or in other shape, which is not limited in the embodiments of the present application. Battery cells are generally divided into three types according to packaging methods: cylindrical battery cells, square battery cells and pouch battery cells, which are not limited in the embodiments of the present application.

The battery cell includes an electrode assembly and an electrolytic solution, the electrode assembly being composed of a positive electrode sheet, a negative electrode sheet and a separator. The battery cell works mainly by moving metal ions between the positive electrode sheet and negative electrode sheet. The positive electrode sheet includes a positive current collector and a positive electrode active material layer. The positive electrode active material layer is coated on the surface of the positive current collector, the positive current collector not coated with the positive electrode active material layer protrudes from the positive current collector coated with the positive electrode active material layer, and the positive current collector not coated with the positive electrode active material layer is used as at least a part of the positive electrode tab. In some embodiments, the positive electrode tab of the positive electrode sheet is the positive current collector not coated with the positive electrode active material layer. In other embodiments, in order to ensure the structural strength of the positive electrode tab, the positive electrode tab include a positive current collector not coated with the positive electrode active material layer and a positive current collector partially coated with the positive electrode active material layer. Taking a lithium-ion battery as an example, the material of the positive current collector may be aluminum, and the positive electrode active material may be lithium cobaltate, lithium iron phosphate, ternary lithium, or lithium manganate, etc. The negative electrode sheet includes a negative current collector and a negative electrode active material layer. The negative electrode active material layer is coated on the surface of the negative current collector, the negative current collector not coated with the negative electrode active material layer protrudes from the negative current collector coated with the negative electrode active material layer, and the negative current collector not coated with the negative electrode active material layer is used as at least a part of the negative electrode tab. In some embodiments, the negative electrode tab of the negative electrode sheet is the negative current collector not coated with the negative electrode active material layer. In other embodiments, in order to ensure the structural strength of the negative electrode tab, the negative electrode tab include a negative current collector not coated with the negative electrode active material layer and a positive current collector partially coated with the negative electrode active material layer. The material of the negative current collector may be copper, and the negative electrode active material may be carbon or silicon, etc. In order to ensure that a large current passes without fusing, the number of positive electrode tabs is multiple and the positive electrode tabs are stacked together, and the number of negative electrode tabs is multiple and the negative electrode tabs are stacked together. The material of the separator may be PP (polypropylene) or PE (polyethylene), etc. In addition, the electrode assembly may be in a winding structure or may be in a laminated/stacked structure, which is not limited in the embodiments of the present application.

For a wound electrode assembly, the positive electrode sheet, the negative electrode sheet and the separator are stacked and wound around a winding center, to form the wound structure. The positive electrode sheet and the negative electrode sheet need to meet a certain length requirement, so as to make the capacity of the battery cell meet the use requirement. For a laminated electrode assembly having continuous negative electrode sheet, the negative electrode sheet needs to meet a certain length requirement, and positive electrode sheets whose length size is relatively small are attached at an interval to the two sides of the negative electrode sheet in the thickness direction respectively, so as to make the capacity of the battery cell meet the use requirement. Moreover, the positive electrode sheet and the negative electrode sheet cannot have defects affecting the use of the electrode sheet, in the length range.

Determining whether there is a defect on the electrode sheet is performed before forming the electrode assembly. For example, for the wound electrode assembly, the detection for determining whether there is a defect on the electrode sheet is completed before the winding; and for the laminated electrode assembly having continuous negative electrode, the detection for determining whether the negative electrode sheet has defect need to be completed before attaching the positive electrode sheets to the two sides of the negative electrode sheet in the thickness direction.

The inventors found that when detecting that the positive electrode sheet or the negative electrode sheet has defect(s), the whole wound electrode assembly is scrapped, greatly increasing the scrap rate of the electrode sheet.

Based on the above consideration, in order to reduce the scrap rate of the electrode sheet, the inventors provide, through in-depth researches, an electrode sheet forming method, in which the first substrate having defect(s) is divided into the first part having the defect(s) and the at least one second part having no defect, and the at least one second part is connected to the second substrate having no defect in the length direction of the second substrate to form the electrode sheet. In this way, only the first part having the defect(s) needs to be scrapped, while the at least one second part having no defect can be fully utilized, thereby preventing the first substrate from being entirely scrapped, improving the utilization rate of the first substrate having defect(s), and reducing the manufacturing cost of a battery.

The electrode sheet forming method disclosed in the embodiments of the present application can be used for the manufacturing of the wound electrode assembly, or the manufacturing of the laminated electrode assembly, which is conducive to reducing the waste of materials in the manufacturing process of wound or laminated electrode assembly, thereby reducing the manufacturing cost. The electrode assembly including the electrode sheet manufactured by the electrode sheet forming method provided by the embodiments of the present application may be used in a battery cell and a battery, as well as electric devices such as vehicles, ships or aircrafts using the battery cell or the battery. The battery cell, battery, etc. disclosed in the present application may be used to form a power supply system for the electric device.

The technical solutions described in the embodiments of the present application are applicable to the battery and the electric device using the battery.

The electric device may be vehicle, mobile phone, portable device, laptop, ship, spacecraft, electric toy and electric tool, etc. The vehicle may be fuel vehicle, gas vehicle or new energy vehicle. The new energy vehicle may be pure electric vehicle, hybrid power vehicle or extended range vehicle, etc. The spacecraft includes airplane, rocket, space shuttle and space ship, etc. The electric toy includes a fixed or mobile electric toy, for example, game console, electric car toy, electric ship toy and electric airplane toy, etc. The electric tool includes metal cutting electric tool, grinding electric tool, assembly electric tool and railway electric tool, for example, electric drill, electric grinder, electric wrench, electric screwdriver, electric hammer, impact electric drill, concrete vibrator and electric planer, etc. The embodiments of the present application do not specifically limit the above electric device.

For convenient description, the following embodiments are described by taking a vehicle as an electric device as example.

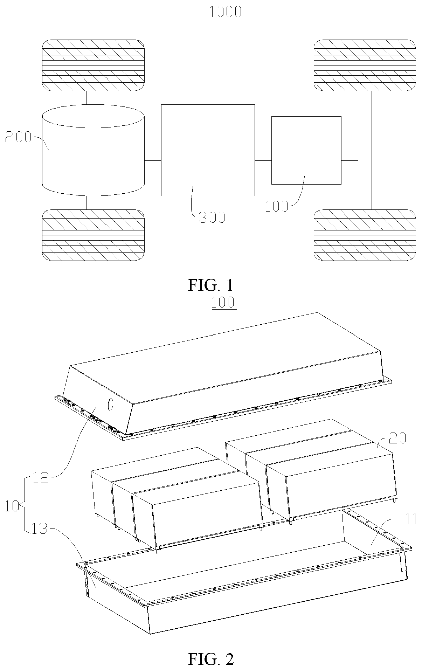

Referring to FIG. 1, a battery 100 is disposed inside the vehicle 1000, and the battery 100 may be disposed at a bottom, head or tail of the vehicle 1000. The battery 100 may be used for supplying power to the vehicle 1000. For example, the battery 100 may be used as an operation power supply of the vehicle 1000.

The vehicle 1000 may further include a controller 200 and a motor 300. The controller 200 is used for controlling the battery 100 to supply power to the motor 300, for example, for a working power demand of the vehicle 1000 during startup, navigation and running.

In some embodiments of the present application, the battery 100 may be used not only as an operation power supply of the vehicle 1000, but also as a driving power supply of the vehicle 1000 to replace or partially replace fuel or natural gas to provide driving power for the vehicle 1000.

Referring to FIG. 2, the battery 100 includes a box 10 and battery cells 20, and the battery cells 20 are accommodated in the box 10.

The box 10 is used to provide an installation space 11 for the battery cells 20. In some embodiments, the box 10 may include a first box 12 and a second box 13. The first box 12 and the second box 13 cover each other, to define the sealed installation space 11 for accommodating the battery cells 20. Certainly, the joint of the first box 12 and the second box 13 may be sealed by a sealing member (not shown in the figures), and the sealing member may be a sealing ring, sealant, etc.

The first box 12 and the second box 12 may be in various shapes, such as a cuboid, a cylinder and so on. The first box 12 may be in a hollow structure having one side opened to form an accommodation cavity for accommodating the battery cells 20, the second box 13 may also be in a hollow structure having one side opened to form an accommodation cavity for accommodating the battery cells 20, and the opening side of the second box 13 covers the opening side of the first box 12, forming the box 10 having the installation space 11. Certainly, it also may be that the first box 12 is in a hollow structure having one side opened to form an accommodation cavity for accommodating the battery cells 20, the second box 13 is in a plate-shaped structure, and the second box 13 covers the opening side of the first box 12, to form the box 10 having the installation space 11.

In the battery 100, there may be one battery cell 20, or multiple battery cells. If there are multiple battery cells 20, the multiple battery cells 20 may be in serial, parallel or hybrid connection with each other. The hybrid connection means that the multiple battery cells 20 are connected with each other both in series and in parallel. The multiple battery cells 20 may be in serial, parallel or hybrid connection with each other, and then the whole composed of the multiple battery cells 20 is accommodated in the box 10. Certainly, it may be that the multiple battery cells 20 are first in serial or in parallel or in hybrid connection with each other to form battery modules, and then the multiple battery modules are in serial or in parallel or in hybrid connection with each other to form a whole, and accommodated in the box 10. The battery cell 20 may be in a shape of cylinder, flat body, cuboid or in other shape. FIG. 2 exemplarily shows the case where the battery cell 20 is square.

In some examples, the battery 100 may further include a bus component (not shown in the figures), and the multiple battery cells 20 may be electrically connected with each other through the bus component, so as to realize serial connection, parallel connection or hybrid connection of multiple battery cells 20.

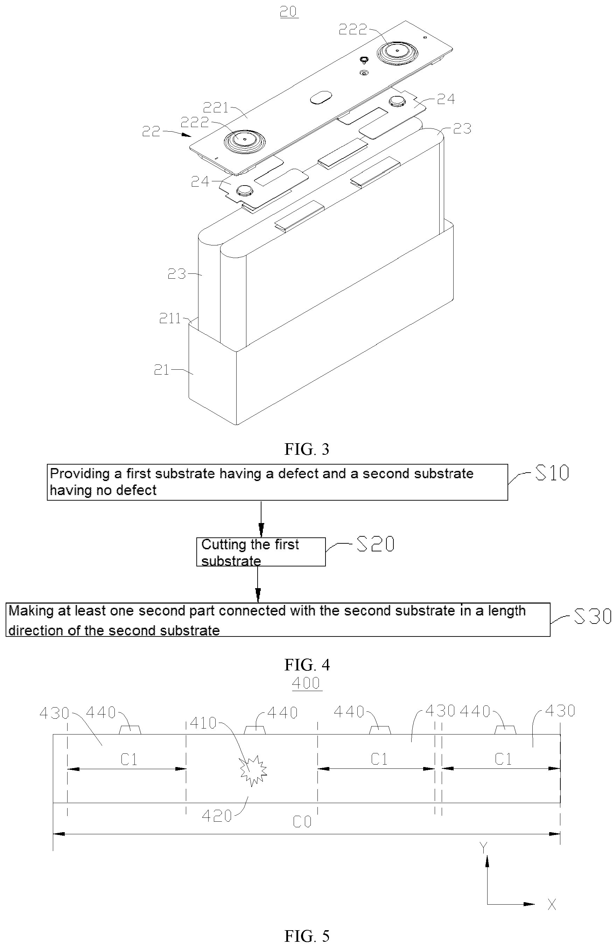

Referring to FIG. 3, the battery cell 20 includes a housing 21, electrode assemblies 23 and an end cover assembly 22. The housing 21 has an opening 211, the electrode assemblies 23 are accommodated in the housing 21, and the end cover assembly 22 is configured to seal and cover the opening 211.

The housing 21 may be in various shapes, such as a cylinder, a cuboid and so on. The shape of the housing 21 may be determined by the specific shape of the electrode assembly 23. For example, if the electrode assembly 23 is in a cylinder structure, the housing 21 may be selected to be in a cylinder structure; and if the electrode assembly 23 is in a cuboid structure, the housing 21 may be selected to be in a cuboid structure. FIG. 3 exemplarily shows the case where the housing 21 and the electrode assembly 23 are square.

The housing 21 may be made of a variety of materials, such as copper, iron, aluminum, stainless steel, aluminum alloy, etc., which is not specially defined in the embodiments of the present application.

The end cover 221 of the end cover assembly 22 is used to seal and cover the opening 211, to form a closed accommodation space (not shown in the figures), and the accommodation space is used to accommodate the electrode assemblies 23. The accommodation space may be used to accommodate an electrolyte, such as electrolytic solution. The end cover assembly 22 is used as a component for outputting electrical energy of the electrode assemblies 23. The end cover in the end cover assembly 22 is provided with electrode terminals 222, where the electrode terminals 222 are used to be electrically connected with the electrode assemblies 23, that is, the electrode terminals 222 are electrically connected with the tabs of the electrode assemblies 23. For example, the electrical terminals 222 are connected with the tabs through current collection members 24, to realize electrical connection between the electrode terminals 222 and the tabs.

It should be indicated that the housing 21 may have one opening 211, or may have two openings. If the housing 21 has one opening 211, there may be one end cover assembly 22, and the end cover assembly 22 may be provided therein with two electrode terminals, where the two electrode terminals are used to be electrically connected with the positive electrode tab and the negative electrode tab of the electrode assembly 23, and the two electrode terminals 222 in the end cover assembly 22 are the positive electrode terminal and the negative electrode terminal, respectively. If the housing 21 has two openings 211, for example, two openings 211 are provided at two opposite sides of the housing 21, there may be two end cover assemblies 22, and the two end cover assemblies 22 cover the two openings 211 of the housing 21. In this case, it may be that the electrode terminal 222 in one end cover assembly 22 is the positive electrode terminal used to be electrically connected with the positive electrode tab of the electrode assembly 23, and the electrode terminal 222 in the other end cover assembly 22 is the negative electrode terminal used to be electrically connected with the negative electrode sheet of the electrode assembly 23.

The electrode assembly 23 may include a positive electrode sheet, a negative electrode sheet and a separator 232. The electrode assembly 23 may be in a wound structure formed by winding the positive electrode sheet, the separator 232 and the negative electrode sheet, or may be in a laminated structure formed by stacking the positive electrode sheet, the separator 232 and the negative electrode sheet. The electrode assembly 23 may include a positive electrode tab (not shown in the figures) and a negative electrode tab (not shown in the figures), where it may be that the positive current collector not coated with the positive electrode active material layer in the positive electrode sheet is used as the positive electrode tab, and it may be that the negative current collector not coated with the negative electrode active material layer in the negative electrode sheet is used as the negative electrode tab.

The manufacturing of the electrode sheet 231 is an important process link in the manufacturing process of a battery 100. As shown in FIG. 4, FIG. 5 and FIG. 6, embodiments of the present application provide an electrode sheet 231 forming method, which electrode sheet 231 forming method including:
S10, providing a first substrate 400 having a defect 410 and a second substrate 500 having no defect 410;
S20, cutting the first substrate 400, to divide the first substrate 400 into a first part 420 having the defect 410 and second parts having no defect 410;
S30, making at least one of the second parts 430 connected with the second substrate 500 in a length direction X of the second substrate 500, to form the electrode sheet 231.

The first substrate 400 and the second substrate 500 are both in a structure including a current collector and active material layers coating the two sides of the current collector in the thickness direction Z thereof. If the positive electrode sheet is manufactured, the first substrate 400 and the second substrate 500 each include a positive current collector and positive electrode active material layers coating the two sides of the positive current collector in the thickness direction Z thereof. If the negative electrode sheet is manufactured, the first substrate 400 and the second substrate 500 each include a negative current collector and negative electrode active material layers coating the two sides of the negative current collector in the thickness direction Z thereof.

The defect 410 refers to the defect 410 that may affect the use performance of electrode sheet 231, for example, too thick or too thin coating of the active material layer caused by coating, serious deformation of the current collector between the two active material layers, and damage of the first substrate 400, etc.

In step S100, whether the first substrate 400 has a defect 410 may be detected by manual checking or by a detection apparatus 2200, for example, by a CCD (charge coupled device) camera, a mobile phone camera, a pickup camera, etc.

"Connect" may be understood as that in the length direction X of the second substrate 500, one end of the second part 430 abuts against one end of the second substrate 500; that in the length direction X of the second substrate 500, one end of the second part 430 and one end of the second substrate 500 have a gap 2313 therebetween; or that in the length direction X of the second substrate 500, one end of the second part 430 is directly or indirectly connected with one end of the second substrate 500. The tabs of the electrode sheet 231 are located at at least one side of the second substrate 500 in the width direction Y. Any two of the thickness direction Z, the length direction X and the width direction Y are perpendicular to each other.

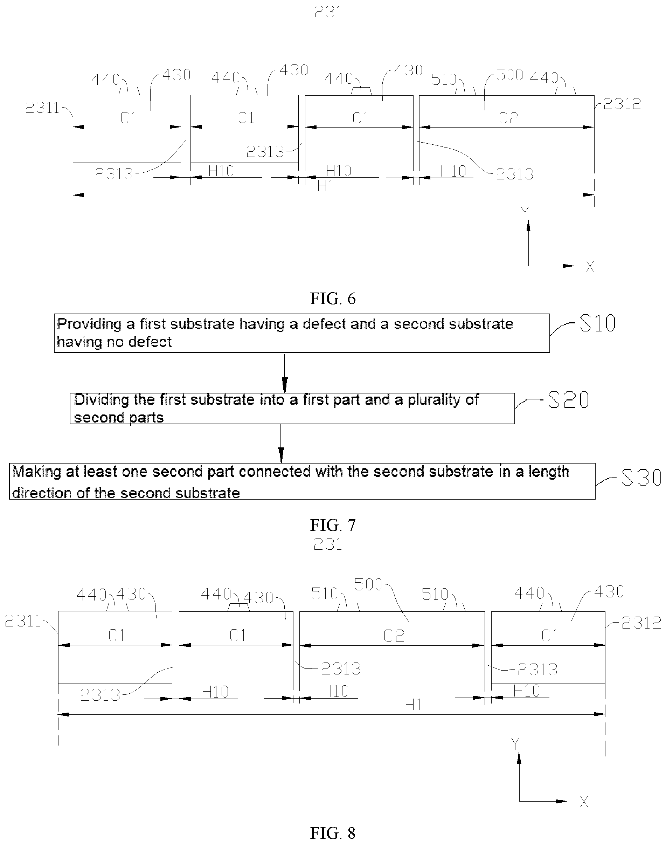

In some embodiments, the length of the first substrate 400 before cutting satisfies the manufacturing requirement of an electrode assembly 23. For the electrode sheet 231 formed after the second parts 430 are connected with the second substrate 500, the size form one end to the other end in the length direction X may be the same as the length of the first substrate 400. As shown in FIG. 5 and FIG. 6, the length of the first substrate 400 is C0, the length of the second part 430 is C1, the length of the second substrate 500 is C2, one end away from the second substrate 500, of the second part 430 most far from the second substrate 500 is a first end 2311 of the electrode sheet 231 in the length direction X, and one end of the second substrate 500 away from the second part 430 is a second end 2312 of the electrode 231 in the length direction X. In the length direction X, the distance H1 between the first end 2311 and the second end 2312 may be equal to the length C0 of the first substrate 400. It should be indicated that if the connection causes the gap 2313 at the middle portion of the electrode sheet 231, H1 includes the width H10 of the gap 2313 in the length direction X. It should be noted that the gap 2313 may be formed at the connection position of the second part 430 and the second substrate 500 and/or at the connection position of two adjacent second parts 430. In order to form the gap 2313, the second part 430 and the second substrate 500 may be attached to the separator 232 at an interval.

The first substrate 400 having defect(s) 410 is divided into the first part 420 having the defect(s) 410 and the second parts 430 having no defect 410, and the second parts 430 having no defect 410 may be connected to the second substrate 500 having no defect 410 to form the electrode sheet 231. In this way, only the first part 420 having the defect(s) 410 needs to be scrapped, while the second parts 430 having no defect 410 can be fully utilized, thereby preventing the first substrate 400 from being entirely scrapped, improving the utilization rate of the first substrate 400 having defect(s) 410, and reducing the manufacturing cost of a battery 100.

In some embodiments, when cutting the first substrate 400, the second substrate 500 may be divided into a first part 420 having the defect 410 and second parts 430 which have no defect 410 and can be used to be connected to the second substrate 500.

In some other embodiments, as shown in FIG. 5, FIG. 6 and FIG. 7, in some other embodiments, the cutting the first substrate 400 includes:
dividing the first substrate 400 into the first part 420 and a plurality of second parts 430.

The dividing the first substrate 400 into the first part 420 and a plurality of second parts 430 is conducive to dividing the first substrate 400 into the available second parts 430 as much as possible, which reduces the scrap volume of the first substrate 400 and increases the utilization rate of the first substrate 400.

If dividing the first substrate 400 into a plurality of second parts 430, the plurality of second parts 430 may be connected with the second substrate 500 in various ways.

For example, as shown in FIG. 6, in some embodiments, the plurality of second parts 430 are made to be connected to the end of the second substrate 500 in the length direction X, to form the electrode sheet 231.

The plurality of second parts 430 are all located at one end of the second substrate 500 in the length direction X, the plurality of second parts 430 are arranged in sequence, side by side, in the length direction X, and two adjacent second parts 430 are connected in the length direction X. Exemplarily, as shown in FIG. 5 and FIG. 6, the first substrate 400 is divided into three second parts 430, the three second parts 430 are all located at one end of the second substrate 500 in the length direction X, the three second parts 430 are arranged in sequence, side by side, in the length direction X, and only one second part 430 is closest to the second substrate 500 in the length direction X. The two adjacent second parts 430 are connected. A gap 2313 may be formed, or a gap 2313 may be not formed at the connection position of the two adjacent second parts 430, and a gap 2313 may be formed, or a gap 2313 may be not formed at the connection position of the second part 430 and the second substrate 500. FIG. 6 shows the case where a gap 2313 is formed at each of the connection position of the two adjacent second parts 430, and the connection position of the second part 430 and the second substrate 500.

The plurality of second parts 430 are connected to one end of the second substrate 500 in the length direction X of the second substrate 500. In other words, the plurality of second parts 430 are concentrated at one end of the second substrate 500 in the length direction X of the second substrate 500, facilitating connection between the second parts 430 and the second substrate 500, and improving the forming efficiency of the electrode sheet 231.

For another example, as shown in FIG. 8, some of the plurality of second parts 430 are connected to one end of the second substrate 500 in the length direction X, and the rest of the plurality of second parts 430 are connected to the other end of the second substrate 500 in the length direction X, to form the electrode sheet 231.

Some of the plurality of second parts 430 are located at one end of the second substrate 500 in the length direction X, and arranged in sequence, side by side, in the length direction X, and the rest of the plurality of second parts 430 are located at the other end of the second substrate 500 in the length direction X, and arranged in sequence, side by side, in the length direction X. Exemplarily, as shown in FIG. 8, the first substrate 400 is divided into three second parts 430, one second part 430 is located at one end of the second substrate 500 in the length direction X and connected with the corresponding end of the second substrate 500, two second parts 430 are located at the other end of the second substrate 500 in the length direction X, and the two second parts 430 are arranged in sequence, side by side, in the length direction X, where only one second part 430 is closest to the second substrate 500 in the length direction X, and the two second parts 430 are connected. In this embodiment, a gap 2313 may be formed, or a gap 2313 may be not formed at the connection position of the two adjacent second parts 430, and a gap 2313 may be formed, or a gap 2313 may be not formed at the connection position of the second part 430 and the second substrate 500. FIG. 8 shows the case where a gap 2313 is formed at each of the connection position of the two adjacent second parts 430, and the connection position of the second part 430 and the second substrate 500.

Some of the second parts 430 are connected to the second substrate 500 at one end of the second substrate 500 in the length direction X, and the rest of the second parts 430 are connected to the second substrate 500 at the other end of the second substrate 500 in the length direction X, to avoid over-concentrated distribution of the second parts 430, thereby improving the quality of the electrode sheet 231.

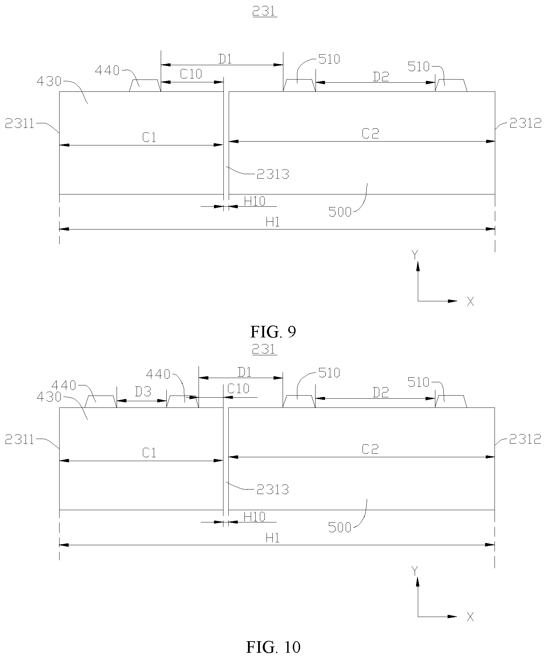

For another example, referring to FIG. 9 and FIG. 10, in some embodiments, one second part 430 is made to be connected to one end of one second substrate 500 in the length direction X, to form the electrode sheet 231.

Each second part 430 may be connected to one second substrate 500, to form the electrode sheet 231. When one second part 430 is connected to one second substrate 500, the rest of the second parts 430 may be left for later use, to be connected with other second substrate(s) 500, to form the electrode sheet 231. In this embodiment, a gap 2313 may be formed, or a gap 2313 may be not formed at the connection position of the second part 430 and the second substrate 500. FIG. 9 shows the case where a gap 2313 is formed at the connection position of the second part 430 and the second substrate 500.

One second part 430 is connected with one end of one second substrate 500 in the length direction X of the second substrate 500, such that the electrode sheet 231 formed in this way has only one connection position, which is conducive to improving the quality of the electrode sheet 231.

In some embodiments, a gap 2313 is formed at the connection position after the second part 430 is connected with the second substrate 500.

In the embodiment where the formed electrode sheet 231 has a plurality of second parts 430, a gap 2313 may be formed, or a gap 2313 may be not formed between two adjacent second parts 430 after they are connected. If the gap 2313 is formed, the width of the gap 2313 between the two adjacent second parts 430 may be equal to, or not equal to the width of the gap 2313 formed after the second part 430 is connected with the second substrate 500.

A gap 2313 is formed at the connection position after the second part 430 is connected with the second substrate 500, such that when bending occurs at the connection position, the gap can reduce the risk of the second part 430 and the second substrate 500 pressing each other at the connection position.

With reference to FIG. 9, FIG. 10 and FIG. 11, in some embodiments, before cutting the first substrate 400, the electrode sheet 231 forming method further includes:
S40, die cutting the first substrate 410, to make the first substrate 410 form a plurality of first tabs 440 arranged at intervals in the length direction X thereof.

The second part 430 may have one first tab 440, or may have a plurality of first tabs 440. The "plurality of" refers to two or more than two.

Certainly, the first substrate 400 may not be die cut to form the tabs.

The plurality of first tabs 440 are arranged at intervals in the length direction X of the first substrate 400, then the first tabs 440 on the second parts 430 may also be arranged at intervals, and after the electrode sheet 231 formed after the second part 430 is connection to the second substrate 500 is manufactured to form an electrode assembly 23, it facilitates the electrolytic solution infiltrating the electrode assembly 23.

With reference to FIG. 9, FIG. 10 and FIG. 12, in some embodiments, the electrode sheet 231 forming method further includes:
S50, die cutting the second substrate 500, to make the second substrate 500 form a plurality of second tabs 510 arranged at intervals in the length direction X thereof,
where after the second parts 430 are connected with the second substrate 500, the plurality of first tabs 440 and the plurality of second tabs 510 form a plurality of tabs of the electrode sheet 231, and in the length direction X, the distance between two adjacent tabs in the plurality of tabs gradually increases from one end to the other end of the electrode sheet 231.

The distance between the two adjacent tabs in the plurality of tabs gradually increases from one end to the other end of the electrode sheet 231. If forming the wound electrode assembly 23a, the distance between the two adjacent tabs in the plurality of tabs gradually increases from the winding start end to the winding finish end of the electrode sheet 231.

It is defined that in the length direction X, the direction from right to left in the figures is the conveying direction of the electrode sheet 231, and from left to right, the distance between two adjacent first tabs 440 on the first substrate 400 gradually increases.

As shown in FIG. 9, if the end of the second part 430 away from the second substrate 500 is considered as the winding start end, the second part 430 has only one first tab 440, and the distance between the first tab 440 and the second tab 510 of the second substrate 500 closest to the second part 430 is smaller than the distance between any two adjacent second tabs 510. In the direction that the second substrate 500 is away from the second part 430, the distance between two adjacent second tabs 510 gradually increases. In FIG. 9, the distance D1 between the first tab 440 on the second part 430 and the second tab 510 of the second substrate 500 closest to the second part 430 and the distance D2 between two adjacent second tabs 510 on the second substrate 500 satisfy D1 <D2. In the embodiment where the second part 430 has only one first tab 440, in the length direction X, the length C10 between one end, close to the second substrate 500, of the first tab 440 of the second part 430 and one end of the second part 430 close to the second substrate 500, and the distance D1 between the first tab 440 on the second part 430 and the second tab 510 on the second substrate 500 closest to the second part 430 satisfy C10<D1, so as to ensure that the distance between two adjacent tabs in the plurality of tabs of the electrode sheet 231 formed by connection of the second part 430 and the second substrate 500 gradually increases from one end to the other end of the electrode sheet 231, and the risk of tab excursion can be reduced when winding the electrode sheet 231 in the direction that the distance between two adjacent tabs gradually increases.

In some embodiments, the second part 430 has a plurality of first tabs 440. As shown in FIG. 10, FIG. 10 shows the case where the second part 430 has two first tabs 440. The distance D3 between the two first tabs 440 of the second part 430, distance D1 between the first tab 440 on the second part 430 closer to the second substrate 500 and the second tab 510 on the second substrate 500 closest to the second part 430, and the distance D2 between two adjacent second tabs 510 on the second substrate 500 satisfy D3<D1 <D2. In the embodiment where the second part 430 has a plurality of first tabs 440, in the length direction X, the length C10 between one end, close to the second substrate 500, of the first tab 440 of the second part 430 closest to the second substrate 500 and one end of the second part 430 close to the second substrate 500, and the distance D1 between the first tab 440 on the second part 430 closest to the second substrate 500 and the second tab 510 on the second substrate 500 closest to the second part 430 satisfy C10<D1, so as to ensure that the distance between two adjacent tabs in the plurality of tabs of the electrode sheet 231 formed by connection of the second part 430 and the second substrate 500 gradually increases from one end to the other end of the electrode sheet 231, and the risk of tab excursion can be reduced when winding the electrode sheet 231 in the direction that the distance between two adjacent tabs gradually increases.

The distance between the two adjacent tabs in the plurality of tabs of the electrode sheet 231 gradually increases from one end to the other end of the electrode sheet 231. When winding the electrode sheet 231 in a direction that the distance between two adjacent tabs gradually increases, it can reduce the risk of tab excursion, reduce the risk of poor welding (e.g., the tab cannot be completely welded with the adapter) and the short circuit of the electrode assembly 23 using the electrode sheet 231, and improve safety performance.

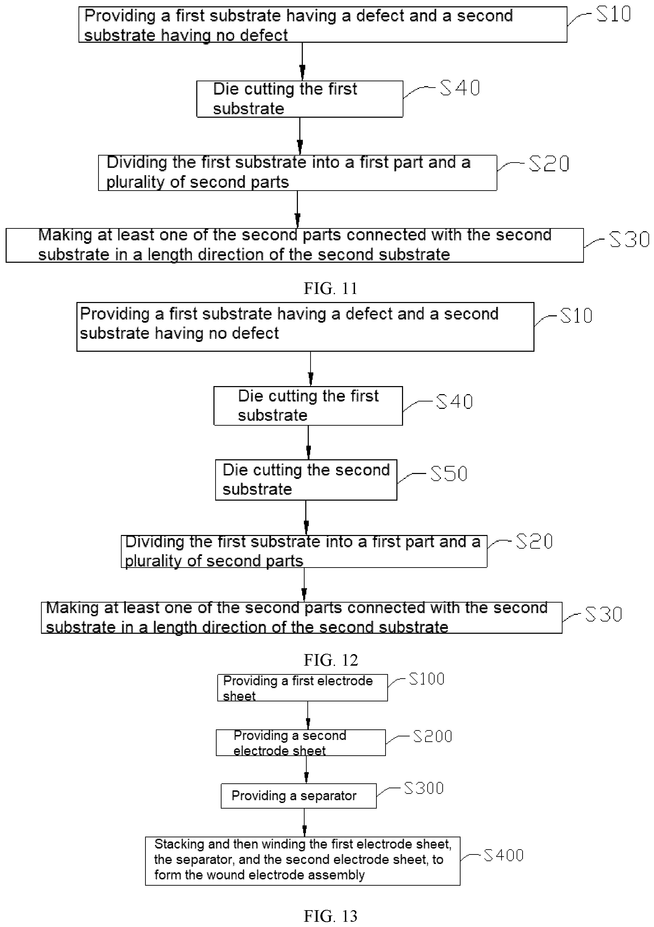

As shown in FIG. 13, embodiments of the present application provide a manufacturing method for a wound electrode assembly 23a, including:
S100, providing a first electrode sheet 231a manufactured by the electrode sheet 231 forming method according to the embodiments of the first aspect;
S200, providing a second electrode sheet 231b, where the polarity of the second electrode sheet 231b is opposite to that of the first electrode sheet 231a;
S3000, providing a separator 232;
S400, stacking and then winding the first electrode sheet 231a, the separator 232, and the second electrode sheet 231b, to form the wound electrode assembly 23a.

The first electrode sheet 231a may be a positive electrode sheet, or a negative electrode sheet. If the first electrode sheet 231a is a positive electrode sheet, the second electrode sheet 231b is a negative electrode sheet; and if the first electrode sheet 231a is a negative electrode sheet, the second electrode sheet 231b is a positive electrode sheet.

That the first electrode sheet 231a, the separator 232 and the second electrode sheet 231b are stacked/laminated means that the first electrode sheet 231a, the separator 232 and the second electrode sheet 231b are stacked in the thickness direction Z of the first electrode sheet 231a. Taking the first electrode sheet 231a as a negative electrode sheet, the first electrode sheet 231a includes a second part 430 and a second substrate 500, with the second part 430 being connected with the second substrate 500 in the length direction X. Two sides of the first electrode sheet 231a in the thickness direction Z are provided with a separator 232 respectively. The separators 232 at the two sides of the first electrode sheet 231a in the thickness direction Z can keep the second part 430 and the second substrate 500 in the connection state between the two separators 232. One side of one separator 232 facing away from the first electrode sheet 231a is provided with a second electrode sheet 231b. Then the first electrode sheet 231a, the separator 232, and the second electrode sheet 231b which are stacked are wound around a winding center.

The manufacturing method for a wound electrode assembly 23a uses the first electrode sheet 231a manufactured by the electrode sheet 231 forming method provided by embodiments of the first aspect, which can reduce the waste of materials in the manufacturing process of the wound electrode assembly 23a and thereby reduce the manufacturing cost of the wound electrode assembly 23a.

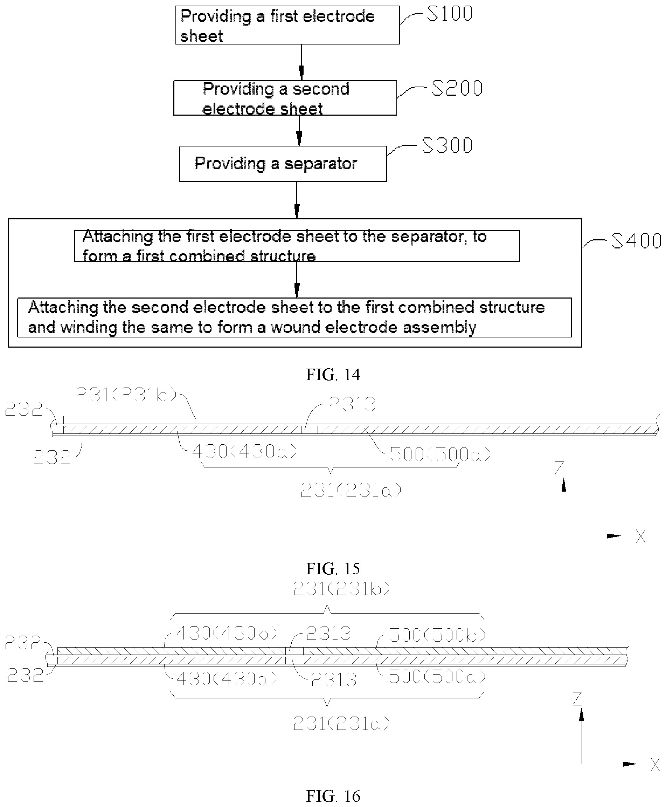

During the winding, the first electrode sheet 231a and the second electrode sheet 231b may have a risk of shifting relative to the separator 232. As shown in FIG. 14 and FIG. 15, in some embodiments, the stacking and then winding the first electrode sheet 231a, the separator 232, and the second electrode sheet 231b to form the wound electrode assembly 23a includes:
attaching the first electrode sheet 231a to the separator 232 to form a first combined structure; and
attaching the second electrode sheet 231b to the first combined structure and then winding the same, to form the wound electrode assembly 23a.

In some embodiments, the first electrode sheet 231a, the separator 232, and the second electrode sheet 231b may also be heated to realize thermal compounding/combining.

In some other embodiments, the surface of the separator 232 in the thickness direction Z is provided with a glue or an adhesive, where when the first electrode sheet 231a is in contact with the surface of the separator 232, the separator 232 and the first electrode sheet 231a may be adhered together through the glue or adhesive on the surface of the separator 232, to form the first combined structure; and when the first electrode sheet 231a and the second electrode sheet 231b are both in contact with the surface of and separator 232, the separator 232 and the second electrode sheet 231b may be adhered together through the glue or adhesive on the surface of the separator 232, or the second electrode sheet 231b and the first combined structure may be adhered together through the glue or adhesive on the surface of the separator 232, to form the second combined structure. At this time, the first electrode sheet 231a, the separator 232, and the second electrode sheet 231b form a whole, and the relative position relationship between the first electrode sheet 231a, the separator 232, and the second electrode sheet 231b is relatively fixed, and shifting and misalignment relative to each other are not easy to occur when winding.

In some other embodiments, the second electrode sheet 231b may be in a continuous structure, and the second electrode sheet 231b may be not attached to the first combined structure.

Since the first electrode sheet 231a includes the second parts 430 and the second substrate 500 which are connected, the separator 232 is attached to the first electrode sheet 231a first. In other words, the second parts 430 and the second substrate 500 are connected by the separator 232, to form the first combined structure, which can reduce the risk of shifting and misalignment of the second parts 430 and the second substrate 500 relative to the separator 232 during the winding.

In some embodiments, the second electrode sheet 231b is manufactured by using the electrode sheet 231 forming method of any of the embodiments above.

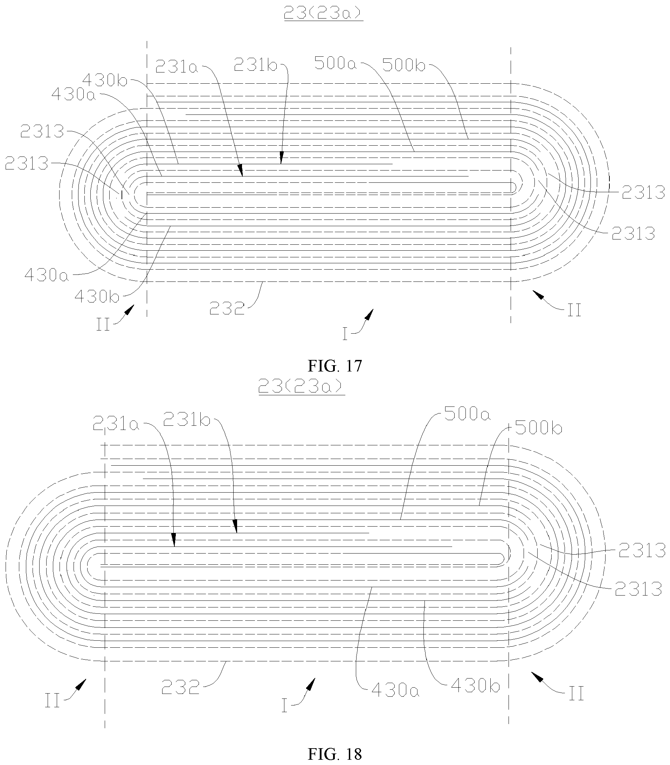

As shown in FIG. 16 and FIG. 17, the second part 430 of the second electrode sheet and the second substrate 500b of the second electrode sheet are both attached to one side of the separator 232 away from the first electrode sheet 231a.

The second part 430b of the second electrode sheet and the second part 430a of the first electrode sheet are used as the winding start sections of the second electrode sheet 231b and the first electrode sheet 231a, respectively. That is, when winding, the winding of the first electrode sheet 231a and the second electrode sheet 231b starts from the second part 430b of the second electrode sheet and the second part 430a of the first electrode sheet, respectively.

As shown in FIG. 17, the first electrode sheet 231a is a negative electrode sheet, and the second electrode sheet 231b is a positive electrode sheet. The first electrode sheet 231a includes one second substrate 500 (second substrate 500a of the first electrode sheet) and two second parts 430 (second parts 430a of the first electrode sheet), and the two second parts 430a of the first electrode sheet are provided adjacent to each other in the winding direction (if the first electrode sheet 231a is in an unwound state, they are provided adjacent to each other in the length direction X). A gap 2313 is formed between the two second parts 430a of the first electrode sheet at the bending region II that it passes first time during winding. A gap 2313 is formed between the second part 430a of the first electrode sheet and the second substrate 500a of the first electrode sheet at the bending region II that it passes second time during winding. Two gaps 2313 are formed in the first electrode sheet 231a due to the connection.

The second electrode sheet 231b includes one second substrate 500 (second substrate 500b of the second electrode sheet) and two second parts 430 (second substrate 500b of the second electrode sheet). The two second parts 430b of the second electrode sheet are provided adjacent to each other in the winding direction (if the second electrode sheet 231b is in an unwound state, they are provided adjacent to each other in the length direction X). A gap 2313 is formed between the two second parts 430b of the second electrode sheet at the bending region II that it passes first time during winding. A gap 2313 is formed between the second part 430b of the second electrode sheet and the second substrate 500b of the second electrode sheet at the bending region II that it passes second time during winding. Two gaps 2313 are formed in the second electrode sheet 231b due to the connection.

The gap 2313 formed between the two second parts 430b of the second electrode sheet at the bending region II that it passes first time is larger than the gap 2313 of the second parts 430a of the first electrode sheet at the bending region II that it passes first time. The gap 2313 formed between the second part 430b of the second electrode sheet and the second substrate 500b of the second electrode sheet at the bending region II that it passes first time is larger than the gap 2313 formed between the second part 430a of the first electrode sheet and the second substrate 500a of the first electrode sheet at the bending region II that it passes first time.

As shown in FIG. 18, the first electrode sheet 231a is a negative electrode sheet, and the second electrode sheet 231b is a positive electrode sheet. The first electrode sheet 231a includes one second substrate 500 (second substrate 500a of the first electrode sheet) and one second part 430 (second part 430a of the first electrode sheet). A gap 2313 is formed between the second part 430a of the first electrode sheet and the second substrate 500a of the first electrode sheet at the bending region II that it passes second time during winding. One gap 2313 is formed in the first electrode sheet 231a due to the connection.

The second electrode sheet 231b includes one second substrate 500 (second substrate 500b of the second electrode sheet) and one second part 430 (second substrate 500b of the second electrode sheet). A gap 2313 is formed between the second part 430b of the second electrode sheet and the second substrate 500b of the second electrode sheet at the bending region II that it passes second time. One gap 2313 is formed in the second electrode sheet 231b due to the connection.

The gap 2313 formed between the two second parts 430b of the second electrode sheet at the bending region II that it passes first time is larger than the gap 2313 of the second parts 430a of the first electrode sheet at the bending region II that it passes first time. The gap 2313 formed between the second part 430b of the second electrode sheet and the second substrate 500b of the second electrode sheet at the bending region II that it passes first time is larger than the gap 2313 formed between the second part 430a of the first electrode sheet and the second substrate 500a of the first electrode sheet at the bending region II that it passes first time.

Certainly, the second part 430a of the first electrode sheet and the second part 430b of the second electrode sheet may also not be provided opposite to each other, such that when winding, the winding of the first electrode sheet 231a starts from the second part 430a of the first electrode sheet, the winding of the second electrode sheet 231b starts form the second substrate 500b of the second electrode sheet; or the winding of the first electrode sheet 231a starts from the second substrate 500a of the first electrode sheet, and the winding of the second electrode sheet 231b starts from the second part 430b of the second electrode sheet.

The manufacturing method for a wound electrode assembly 23a uses the second electrode sheet 231b manufactured by the electrode sheet 231 forming method provided by the embodiments above, which can reduce the waste of materials in the manufacturing process of the wound electrode assembly 23a and thereby reduce the manufacturing cost of the wound electrode assembly 23a.

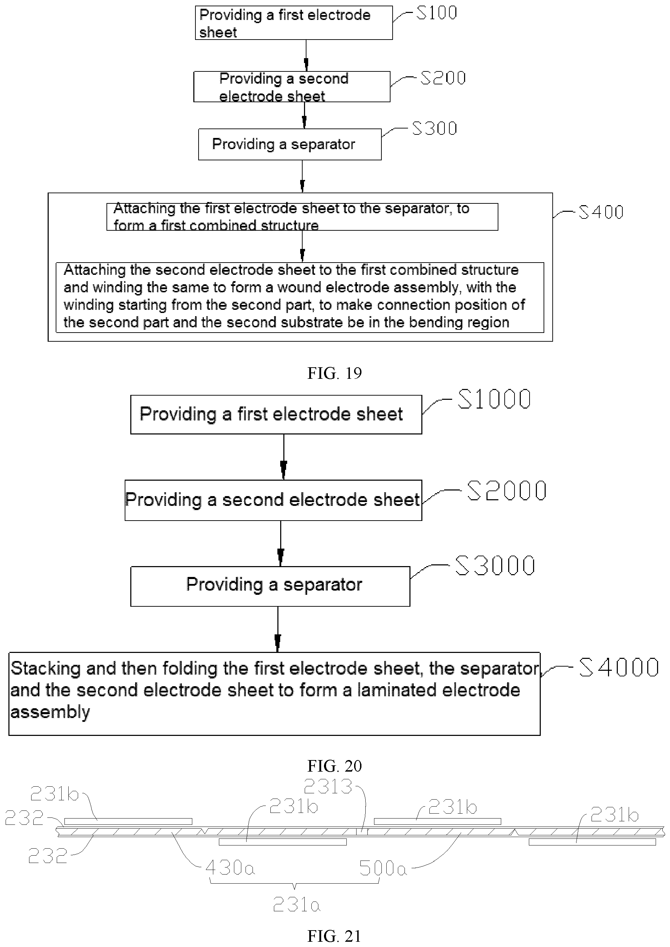

As shown in FIG. 19, In some embodiments, when winding the first electrode sheet 231a, the winding starts from the second part 430.

If the second electrode sheet 231b is also manufactured by using the electrode sheet 231 forming method provided by any of the embodiments above, when winding, the winding of the second electrode sheet 231b may also start from the second part 430b of the second electrode sheet. In some other embodiments, the winding of the second electrode sheet 231b may also start from the second substrate 500b of the second electrode sheet.

The winding starts from the second part 430, such that the second part 430 is closer to the winding center relative to the second substrate 500, and the second substrate 500 has a certain binding ability to the second part 430, which can improve the structure stability of the wound electrode assembly 23a.

Continuing to refer to FIG. 17, FIG. 18 and FIG. 19, in some embodiments, the wound electrode assembly 23a includes a flat straight region I and two bending regions II, where the two bending regions II are connected with the two ends of the flat straight region, respectively;

The stacking and then winding the first electrode sheet 231a, the separator 232, and the second electrode sheet 231b to form the wound electrode assembly 23a includes:

making connection position of the second part 430 and the second substrate 500 be in the bending region. II

If the first electrode sheet 231a and the second electrode sheet 231b are both manufactured by using the electrode sheet 231 forming method of any of the embodiments above, the connection position of the second part 430a of the first electrode sheet and the second substrate 500a of the first electrode sheet and the connection position of the second part 430b of the second electrode sheet and the second substrate 500b of the second electrode sheet may both be in the bending region(s) II. In the embodiment where the winding of the first electrode sheet 231a starts from the second part 430a of the first electrode sheet and the winding of the second electrode sheet 231b starts form the second part 430b of the second electrode sheet, the connection position of the second part 430a of the first electrode sheet and the second substrate 500a of the first electrode sheet and the connection position of the second part 430b of the second electrode sheet and the second substrate 500b of the second electrode sheet may be in the same bending region II.

In the embodiment where a gap 2313 is formed after the second part 430 is connected to the second substrate 500, after the winding, the gap 2313 is located in the bending region II, and the gap 2313 formed by connection between the second part 430b of the second electrode sheet and the second substrate 500b of the second electrode sheet is larger than the gap 2313 formed by connection between the second part 430a of the first electrode sheet and the second substrate 500a of the first electrode sheet, to increase the CB value of the bending region II and reduce the risk of lithium plating in the bending region II. In the above, CB value is a ratio of the capacity of the negative electrode active material to the capacity of the positive electrode active material.

The connection position of the second part 430 and the second substrate 500 is in the bending region II, which can reduce the risk of lithium plating in the bending region II.

As shown in FIG. 20, embodiments of the present application further provide a manufacturing method for a laminated electrode assembly 23b, including:
S1000, providing a first electrode sheet 231a manufactured by the electrode sheet 231 forming method according to the embodiments of the first aspect, where the first electrode sheet 231a is a negative electrode sheet;
S2000, providing a second electrode sheet 231b, where the second electrode sheet 231b is a positive electrode sheet;
S3000, providing a separator 232;
S4000, stacking and then folding the first electrode sheet 231a, the separator 232, and the second electrode sheet 231b, to form the laminated electrode assembly 23.

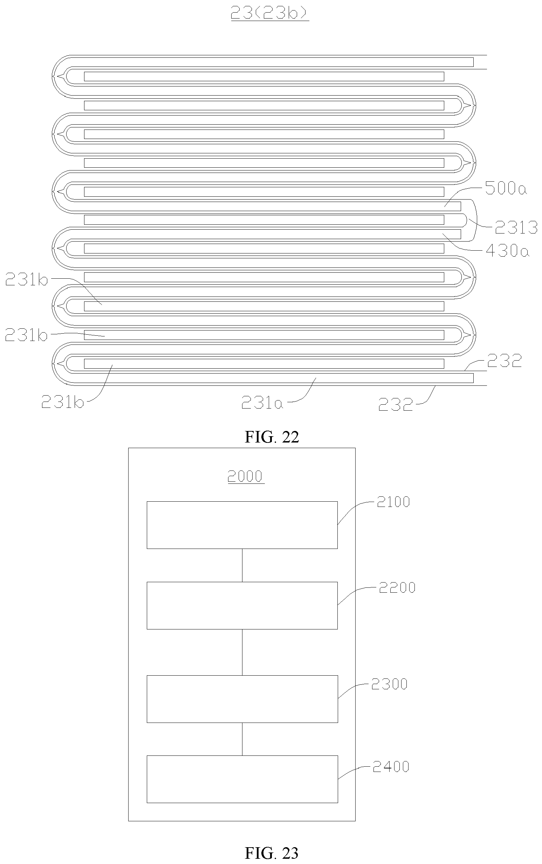

As shown in FIG. 21 and FIG. 22, two separators 232 are provided, the separators 232 are each in a continuous band-shaped structure, where before bending the first electrode sheet 231a, the two separators 232 are attached to two sides of the first electrode sheet 231a in the thickness direction Z respectively, and a plurality of second electrode sheets are attached to sides of the two separators 232 away from the negative electrode sheet.

The two separators 232 are attached to two sides of the first electrode sheet 231a in the thickness direction Z respectively, so as to make the second part 430a of the first electrode sheet connected with the second substrate 500a of the first electrode sheet at the connection position, to realize indirect connection between the second part 430a of the first electrode sheet and the second substrate 500a of the first electrode sheet through the separator 232, and avoid misalignment of the second part 430a of the first electrode sheet and the second substrate 500a of the first electrode sheet. The plurality of second electrode sheets are attached to sides of the separators 232 away from the first electrode sheet 231a, to make the first electrode sheet 231a, the separators 232 and the plurality of second electrode sheets 231b form a whole structure. The whole structure is folded along a S trajectory to form the laminated electrode assembly 23b.

The manufacturing method for a laminated electrode assembly 23a uses the negative electrode sheet manufactured by the electrode sheet 231 forming method provided by any of the embodiments above, which can reduce the waste of materials in the manufacturing process of the laminated electrode assembly 23 and thereby reduce the manufacturing cost of the wound electrode assembly 23a.

Continuing to refer to FIG. 17, FIG. 18 and FIG. 19, embodiments of the present application further provide an electrode assembly 23, the electrode assembly 23 including a separator 232 and two electrode sheets 231 having opposite polarities, where at least one of the two electrode sheet 231 is manufactured by using the electrode sheet 231 forming method of the embodiments above, and the separator 232 is used to separate the two electrode sheets 231.

In the above, one of the two electrode sheets 231 is a positive electrode sheet and the other is negative electrode sheet. It is possible that only the positive electrode sheet or the negative electrode sheet is manufactured by using the electrode sheet 231 forming method of the embodiments above, or the two electrode sheets 231 are both manufactured by using the electrode sheet 231 forming method of the embodiments above.

At least one electrode sheet 231 of the electrode assembly 23 is manufactured by the electrode sheet 231 forming method provided by embodiments of the first aspect, which can reduce the waste of materials in the manufacturing process of the electrode assembly 23 and thereby reduce the manufacturing cost of the electrode assembly 23.

As shown in FIG. 17 and FIG. 18, in some embodiments, the electrode assembly 23 is a wound electrode assembly 23a; and the two electrode sheets 231 are both manufactured by using the electrode sheet 231 forming method of any of the embodiments above.

In other embodiments, for the wound electrode assembly 23a, it may be that one of the two electrode sheets 231 (positive electrode sheet or negative electrode sheet) is manufactured by using the electrode sheet 231 forming method of the embodiments above.

Two electrode sheets 231 of the electrode assembly 23 are both manufactured by the electrode sheet 231 forming method provided by any of the embodiments above, which can reduce the waste of materials in the manufacturing process of the electrode assembly 23 and thereby reduce the manufacturing cost of the electrode assembly 23.

Continuing to refer to FIG. 17 and FIG. 22, in some embodiments, a gap 2313 is formed at the connection position of the second part 430 and the second substrate 500.

Each electrode sheet 231 may have one or multiple gaps 2313 formed due to the connection, multiple meaning two and more than two. As shown in FIG. 17, each electrode sheet 231 may have multiple gaps 2313. As shown in FIG. 18 and FIG. 22, each electrode sheet 231 may have only one gap 2313.

That a gap 2313 is formed at the connection position of the second part 430 and the second substrate 500 means that there is no contact between one end of the second part 430 close to the second substrate 500 and one end of the second substrate 500 close to the second part 430.

In some other embodiments, the second part 430 and the second substrate 500 may be in contact and have no gap 2313 formed therebetween at the connection position.

A gap 2313 is formed at connection position of the second part 430 and the second substrate 500, and that there are no active materials at the gap 2313 position can reduce the risk of lithium plating. When bending occurs at the connection position, the gap 2313 can reduce the risk of the second part 430 and the second substrate 500 pressing each other at the connection position.

Referring to FIG. 17 and FIG. 18, in some embodiments, the wound electrode assembly 23a includes a flat straight region I and two bending regions II, where the two bending regions II are connected with the two ends of the flat straight region I, respectively; and the gap 2313 is located in the bending region II.

As shown in FIG. 17 and FIG. 18, a gap 2313 is present at the connection position of the second part 430 and the second substrate 500 of each of the two electrode sheets, and the gaps are in the same bending region II. The two electrode sheets 231 are defined as the first electrode sheet 231a and the second electrode sheet 231b respectively, and one of the first electrode sheet 231a and the second electrode sheet 231b is a positive electrode sheet and the other is negative electrode sheet. The gap 2313 of the positive electrode sheet (second electrode sheet 231b) is larger than the gap 2313 of the negative electrode sheet (first electrode sheet 231a), facilitating increasing the CB value of the bending region II and reducing the risk of lithium plating in the bending region II. That a gap 2313 formed by the connection of the second part 430 and the second substrate 500 is located at the bending region II can also reduce the risk of the second part 430 and the second substrate 500 pressing each other due to the bending of the electrode sheet 231 at the connection position.

In some embodiments, a part or all of the second part 430 is located in the innermost circle of the wound electrode assembly 23a.

As shown in FIG. 17 and FIG. 18, all of the second part 430 is located in the innermost circle of the wound electrode assembly 23a. In other embodiments, the second part 430 is relatively long, it may be that only a part of the second part 430 is located in the innermost circle of the wound electrode assembly 23a, and the other part extends to other circles.

A part or all of the second part 430 is located in the innermost circle of the wound electrode assembly 23a, and the second part 430 is closer to the winding center relative to the second substrate 500, then the second substrate 500 has a certain binding ability to the second part 430, which can improve the structure stability of the wound electrode assembly 23a.

Embodiments of the present application further provide a battery cell 20, which battery cell 20 includes at least one electrode assembly 23 provided by the embodiments above.

The battery cell 20 including the electrode assembly 23 provided by the embodiments above has low material waste rate during the manufacturing process, and can reduce the manufacturing cost.

Embodiments of the present application further provide a battery 100, which battery 100 includes at least one battery cell 20 provided by the embodiments above.

Embodiments of the present application further provides an electric device, including at least one battery 100 provided by the above embodiments.

As shown in FIG. 23, embodiments of the present application further provide a manufacturing device 2000 for an electrode sheet, the manufacturing device 2000 for an electrode sheet including a conveying apparatus 2100, a detection apparatus 2200, and a cutting apparatus 2300, where the conveying apparatus 2100 is configured to convey a first substrate 400; the detection apparatus 2200 is configured to detect whether the first substrate 400 has defect(s) 410; and the cutting apparatus 2300 is configured to cut the first substrate 400 having defect(s) 410, to divide the first substrate 400 into a first part 420 having defect(s) 410 and at least one second part 430 having no defect 410.

Reference may be made to related technologies for the structure of the conveying apparatus 2100, and it will not be repeated here.

The detection apparatus 2200 may be a CCD camera, a mobile phone camera, a pickup camera, etc.

The cutting apparatus 2300 may be a laser cutting apparatus 2300, a cutter cutting apparatus 2300, etc. The cutting apparatus 2300 is provided downstream of the detection apparatus 2200, such that the first substrate 400 is cut by the cutting apparatus 2300 after the first substrate 400 is detected by the detection apparatus 2200 to have the defect 410.

The electrode sheet 231 is manufactured through the manufacturing device 2000 for the electrode sheet, reducing the manufacturing cost of the electrode sheet 231 and thereby reducing the manufacturing cost of the battery 100.

As shown in FIG. 23, in some embodiments, the manufacturing device 2000 for the electrode sheet further includes: a die cutting apparatus 2400, provided upstream of the detection apparatus 2200, wherein the die cutting apparatus 2400 is configured to die cut the first substrate 400, to make the first substrate 400 form a plurality of first tabs 440 arranged at intervals in the length direction X thereof.

The die cutting apparatus 2400 may be a laser die cutting apparatus, a cutter die cutting apparatus etc. The die cutting apparatus 2400 is provided upstream of the detection apparatus 2200, then before detecting by the detection apparatus 2200 whether the first substrate 400 has a defect 410, the first substrate 400 is die cut, to form a plurality of first tabs 440 arranged at intervals in the length direction X of the first substrate 400. Certainly, the die cutting apparatus 2400 may be also used to die cut the second substrate 500.

Embodiments of the present application provide an electrode sheet 231 forming method, which electrode sheet 231 forming method including:
detecting whether the first substrate 400 has defect(s) 410, cutting the first substrate 400 if the first substrate 400 has defect(s) 410, to divide the first substrate 400 into a first part 420 having defect(s) 410 and at least one second part 430 having no defect 410; and making one second part 430 connected with one second substrate 500 in the length direction X of the second substrate 500, to form the electrode sheet 231. A gap 2313 is formed after the second part 430 is connected with the second substrate 500. For such electrode sheet 231 forming method, only the first part 420 having the defect(s) 410 needs to be scrapped, while the second parts 430 having no defect 410 can be fully utilized, thereby preventing the first substrate 400 from being entirely scrapped, improving the utilization rate of the first substrate 400 having defect(s) 410, and reducing the manufacturing cost of a battery 100.

When winding the electrode sheet 231 to form a wound electrode assembly 23a, the winding starts form the second part 430, and the second part 430 is located at the innermost circle of the wound electrode assembly 23a. If the first electrode sheet 231a and the second electrode sheet 231b are both manufactured by using the above electrode sheet 231 forming method, the winding of each of the first electrode sheet 231a and the second electrode sheet 231b starts from the second part 430, and the second part 430a of the first electrode sheet and the second part 430b of the second electrode sheet are both located in the innermost circle. After winding the electrode sheet 231 to form a wound electrode component 23a, the gap 2313 is located in the bending region II, the gap 2313 of the first electrode sheet 231a and the gap 2313 of the second electrode sheet 231b are both located in the bending region II, and at least one gap 2313 of the first electrode sheet 231a and at least one gap 2313 of the second electrode sheet 231b are located in the same bending region II, reducing the risk of lithium plating in the bending region II.

The above are only preferred embodiments of the present application and are not intended to limit the present application. For those skilled in the art, the present application may have various modifications and variations. Any modifications, equivalent replacements, improvements, etc. made within the spirit and principles of the present application shall be included in the protection scope of the present application.

## Claims

1. An electrode sheet forming method, comprising:
providing a first substrate having a defect and a second substrate having no defect;
cutting the first substrate, to divide the first substrate into a first part having the defect and at least one second part having no defect; and
making the at least one second part connected with the second substrate in a length direction of the second substrate, to form an electrode sheet.

2. The electrode sheet forming method according to claim 1, wherein the cutting the first substrate comprises:
dividing the first substrate into the first part and a plurality of second parts.

3. The electrode sheet forming method according to claim 2, wherein the plurality of second parts are made to be connected with one end of the second substrate in the length direction to form the electrode sheet.

4. The electrode sheet forming method according to claim 2, wherein some of the plurality of second parts are connected to one end of the second substrate in the length direction, and the rest of the plurality of second parts are connected to the other end of the second substrate in the length direction, to form the electrode sheet.

5. The electrode sheet forming method according to claim 2, one of the second parts is connected with one end of one second substrate in the length direction to form the electrode sheet.

6. The electrode sheet forming method according to any one of claims 1 to 5, wherein a gap is formed at a connection position after the at least one second part is connected with the second substrate.

7. The electrode sheet forming method according to any one of claims 1 to 5, wherein before cutting the first substrate, the electrode sheet forming method further comprises:
die cutting the first substrate, to make the first substrate form a plurality of first tabs arranged at intervals in the length direction thereof.

8. The electrode sheet forming method according to claim 7, further comprising:
die cutting the second substrate, to make the second substrate form a plurality of second tabs arranged at intervals in the length direction thereof,
wherein after the at least one second part is connected with the second substrate, the plurality of first tabs and the plurality of second tabs form a plurality of tabs of the electrode sheet, and in the length direction, a distance between two adjacent tabs in the plurality of tabs gradually increases from one end to the other end of the electrode sheet.

9. A manufacturing method for a wound electrode assembly comprising:
providing a first electrode sheet manufactured by the electrode sheet forming method according to any one of claims 1 to 8;
providing a second electrode sheet, wherein a polarity of the second electrode sheet is opposite to a polarity of the first electrode sheet;
providing a separator;
stacking and then winding the first electrode sheet, the separator and the second electrode sheet, to form the wound electrode assembly.

10. The manufacturing method for a wound electrode assembly according to claim 9, wherein the stacking and then winding the first electrode sheet, the separator and the second electrode sheet to form the wound electrode assembly comprises:
attaching the first electrode sheet to the separator to form a first combined structure; and
attaching the second electrode sheet to the first combined structure and then winding the first combined structure, to form the wound electrode assembly.

11. The manufacturing method for a wound electrode assembly according to claim 9, wherein the second electrode sheet is manufactured by using the electrode sheet forming method according to any one of claims 1 to 8.

12. The manufacturing method for a wound electrode assembly according to any one of claims 9 to 11, wherein when winding the first electrode sheet, the winding starts from the second part.

13. The manufacturing method for a wound electrode assembly according to any one of claims 9 to 11, wherein the wound electrode assembly comprises a flat straight region and two bending regions, wherein the two bending regions are connected with two ends of the flat straight region, respectively; and
the stacking and then winding the first electrode sheet, the separator and the second electrode sheet to form the wound electrode assembly comprises:
making connection position of the second part and the second substrate be in the bending region.

14. A manufacturing method for a laminated electrode assembly, comprising:
providing a first electrode sheet manufactured by the electrode sheet forming method according to any one of claims 1 to 8, wherein the first electrode sheet is a negative electrode sheet;
providing a second electrode sheet, wherein the second electrode sheet is a positive electrode sheet;
providing a separator; and
stacking and then folding the first electrode sheet, the separator and the second electrode sheet, to form the laminated electrode assembly.

15. An electrode assembly, comprising:
two electrode sheets having opposite polarities, wherein at least one of the two electrode sheets is manufactured by using the electrode sheet forming method according to any one of claims 1 to 8; and
a separator, configured for separating the two electrode sheets.

16. The electrode assembly according to claim 15, wherein the electrode assembly is a wound electrode assembly; and
the two electrode sheets are both manufactured by using the electrode sheet forming method according to any one of claims 1 to 8;

17. The electrode assembly according to claim 16, wherein a gap is formed at a connection position of the second part and the second substrate.

18. The electrode assembly according to claim 17, wherein the wound electrode assembly comprises a flat straight region and two bending regions, and the two bending regions are connected with two ends of the flat straight region, respectively; and
the gap is located in the bending region.

19. The electrode assembly according to any one of claims 16 to 18, wherein a part or all of the second part is located in an innermost circle of the wound electrode assembly.

20. A battery cell, comprising at least one electrode assembly each according to any one of claims 15-19.

21. A battery, comprising at least one battery cell each according to claim 20.

22. An electric device, comprising at least one battery each according to claim 21.

23. A manufacturing device for an electrode sheet, comprising:
a conveying apparatus, configured for conveying a first substrate;
a detection apparatus, configured for detecting whether the first substrate have a defect;
a cutting apparatus, configured for cutting the first substrate having the defect, to divide the first substrate into a first part having the defect and at least one second part having no defect;

24. The manufacturing device for an electrode sheet according to claim 23, further comprising:
a die cutting apparatus, provided upstream of the detection apparatus, wherein the die cutting apparatus is configured for die cutting the first substrate, to make the first substrate form a plurality of first tabs arranged at intervals in a length direction thereof.
